(19) Europäisches Patentamt / European Patent Office / Office européen des brevets

(11) **EP 4 496 435 B1**

(12) **EUROPEAN PATENT SPECIFICATION**

(45) Date of publication and mention
of the grant of the patent:
**24.12.2025 Bulletin 2025/52**

(21) Application number: **23213324.9**

(22) Date of filing: **30.11.2023**

(51) International Patent Classification (IPC):
***H05B 47/165*** *(2020.01)*    ***H05B 47/12*** *(2020.01)*

(52) Cooperative Patent Classification (CPC):
**H05B 47/165; H05B 47/197;** Y02B 20/40

(54) **LIGHTING EFFECT DISPLAY METHOD AND TERMINAL BASED ON MUSIC RHYTHM**

ANZEIGEMETHODE UND TERMINAL FÜR LICHTEFFEKTE BASIEREND AUF DEM MUSIKRHYTHMUS

PROCÉDÉ D AFFICHAGE D EFFET D ÉCLAIRAGE ET TERMINAL BASÉ SUR LE RYTHME DE LA MUSIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.07.2023 CN 202310891726**

(43) Date of publication of application:
**22.01.2025 Bulletin 2025/04**

(73) Proprietor: **Agzzx Optoelectronics Technology Co., Ltd**
**Fuzhou Fujian (CN)**

(72) Inventors:
• **LIN, Fufei**
**Fuzhou (CN)**
• **ZHANG, Huirong**
**Fuzhou (CN)**
• **WANG, Dong**
**Fuzhou (CN)**

(74) Representative: **Chung, Hoi Kan**
**Mandarin IP Limited**
**7 Cherry Trees**
**Great Shelford**
**Cambridge CB22 5XA (GB)**

(56) References cited:
CN-A- 115 123 072     JP-A- 2008 226 644
KR-A- 20100 044 020

## Description

### Technical field

The present invention relates to the technical field of lighting effect display, especially a lighting effect display method and terminal based on music rhythm.

### Background technology

Light strips are usually used in occasions such as house decoration, parties and festivals. For currently available intelligent LED light strips, controllers and wireless modules are provided in the LED light strips for communicating with mobile phones, so that, users can select colors on mobile apps, and can change the lighting effects based on rhythms of ambient musical signals. Also, it is possible to change the brightness and illumination manners of the LED lights according to rhythmic changes of the music, so as to enhance user experience and festive atmosphere.

At present, when obtaining audio frequency signals, the commercially available intelligent light elements are poor in noise filtering and treatment, and are susceptible to interference from a variety of noises, the lights are simply controlled according to the volume of the music. In continuous high volume rhythms, where features corresponding to the rhythms are not prominent, lighting effects may exhibit continuous high-brightness, or the lights may change abruptly influenced by the noise waves. Visually, it may appear that the rhythmic changes are not obvious, and correlation between audio rhythmic beats and lighting effects is not strong. JP2008226644A discloses a sound synchronized illumination device provided with a low-pass and a high-pass filters.

### Summary of the invention

The technical problem to be solved in the present invention is to provide a lighting effect display method and terminal based on music rhythm, so as to enhance correlation between audio rhythmic beats and light effects.

To address the foregoing problem, the technical solution used in the present invention is:

A lighting effect display method based on music rhythm, comprising:

Receiving frames of audio frequency signals collected as per predetermined time intervals, filtering the audio frequency signals and thereby extracting music rhythms, normalizing and windowing the audio frequency signals and converting the normalized and windowed audio frequency signals to be acoustic pressure level data; Conducting exponential forecasting of the acoustic pressure level data, calculating variation values of said exponential forecasting results by a first order differential equation, and when the variation values reach a triggering condition, outputting light effects dynamically engaged with the music rhythms.

To address the foregoing problem, another technical solution that the present invention adopts is:

A lighting effect display terminal based on music rhythm, comprising a storage memory, a processor and a computer program stored on the storage memory and can be run by the processor, wherein the processor executes the computer program to realize the abovementioned lighting effect display method based on music rhythm.

The beneficial effects of the present invention are: by filtering the collected audio frequency signals and extracting the music rhythms, more accurate light effects can be allocated to the audio frequency; by normalizing and windowing the audio frequency signals, and converting the same to the acoustic pressure level data, and conducting exponential forecasting and calculating variation values thereof, by treatment of the audio frequency signals, converting and forecasting the change values of the audio frequency, the calculation speed is improved while calculation cost is reduced. When the change values reach a triggering condition, light effects dynamically engaging with the music rhythms will be output, correlation between the music rhythms and the lighting effects will be improved and the light will change rhythmically.

### Brief description of drawings

Figure 1 is a schematic flowchart diagram showing a lighting effect display method based on music rhythm according to an embodiment of the present invention;

Figure 2 is a schematic diagram showing a lighting effect display terminal based on music rhythm according to an embodiment of the present invention;

Figure 3 is a modular diagram showing the lighting effect display method based on music rhythm according to an embodiment of the present invention;

Figure 4 is a schematic diagram showing specific steps of the lighting effect display method based on music rhythm according to an embodiment of the present invention;

Figure 5 is a curve diagram showing a loudness function according to an embodiment of the present invention;

Figure 6 is a diagram showing a peak threshold according to an embodiment of the present invention;

Figure 7 is a curve diagram showing original audio frequency signals according to an embodiment of the present invention;

Figure 8 is a curve diagram showing normalized audio frequency signals according to an embodiment of the present invention;

Figure 9 is a curve diagram showing normalized and windowed audio frequency signals according to an embodiment of the present invention;

Figure 10 is a curve diagram showing acoustic pressure level data and sensitivity thresholds according to an embodiment of the present invention; and

Figure 11 is a curve diagram showing exponential forecasting result values and the peak threshold according to an embodiment of the present invention.

In the drawings:

1 lighting effect display terminal based on music rhythm; 2 storage memory; and 3 processor.

**Embodiments**

To show the technical solutions, the purposes and the effects of the present invention, hereinafter a description will be given in conjunction with the embodiments and the drawings.

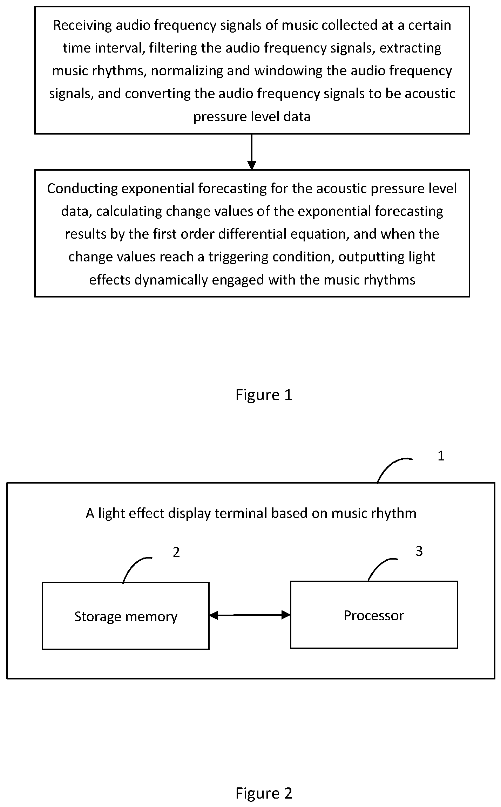

Please refer to figure 1, an embodiment of the present invention provides a lighting effect display method based on music rhythm, comprising:

Receiving audio frequency signals of music collected as per predetermined time intervals, filtering the audio frequency signals, extracting music rhythms, normalizing and windowing the audio frequency signals, and converting the audio frequency signals to be acoustic pressure level data;

Conducting exponential forecasting for the acoustic pressure level data, calculating variation values of forecasting results by first-order differential equations, and outputting dynamically matched light effects in combination with the music rhythms when the change values reach a triggering condition.

From the foregoing description, it can be known that the beneficial effects of the present invention are: by filtering the collected music audio frequencies and extracting the music rhythms, it is convenient to accommodate more accurate light effects for the audio frequencies; by normalizing and windowing the audio frequency signals, and converting the same to be acoustic pressure level data, thereafter, conducting exponential forecasting and calculating the variation values, by treatment of the audio frequency signals, converting and forecasting the variation values of the audio frequencies can be obtained, calculation speed is improved and calculation cost is reduced. When the change values reach the triggering conditions, light effects dynamically engaged with the music rhythms can be output, correlation between the music rhythms and the light effects can be improved and rhythmic changes of the lights are good.

Further, normalizing the audio frequency signals comprises:

Reducing values of components in each frame of the audio frequency signals with average values of the components in each frame of the audio frequency signals:

$$x_{\mathrm{ave}}[t] = \sum_{i=1}^{m} x_{v0}[i] \Big/ m$$

;

$$x'[i] = x_{v0}[i] - x_{\mathrm{ave}}[t];$$

in the equation, t represents a frame of data at a time slot t, m is a serial number of a data point of a component in each frame of data, $1 \le i \le m$, $x_{v0}[i]$ means a value of an ith component in each frame, $x_{\mathrm{ave}}[t]$ is an average value of components in the frame of data in the time slot of t, and $x'[i]$ is a normalized audio frequency signal.

From the foregoing description, it can be known that, by normalizing the audio frequency signals, the average value of each frame is guaranteed to be 0, so as to facilitate data processing.

Further, windowing the audio frequency signals comprises:

Adding a hamming window function for each frame of normalized audio frequency signals, and multiplying the normalized audio frequency signals with the window function:

$$\omega(i) = \begin{cases} 0.54 - 0.46\cos[2\pi i /(m-1)], & 0 \le i \le m-1 \\ 0, & otherwise \end{cases};$$

$$x_v[i] = x'[i] \times \omega(i);$$

in the equation, $\omega(i)$ represents the window function and $x_v[i]$ represents windowed audio frequency signals.

From the foregoing description, it can be known that, by framing and windowing the audio frequency signals, revelation of the frequency spectrum can be prevented. Further, converting the audio frequency signals to be acoustic pressure level data comprises:

Calculating acoustic pressure level data $x_{spl}[t]$ of the processed audio frequency signals;

$$P = \sqrt{\sum_{i=1}^{m} x_v[i]^2 / m};$$

$$x_{spl}[t] = 20\log(P/P_0) = 10\log\left(P^2 / P_0^2\right) = 10\log\left(\sum_{i=1}^{m} x_v[i]^2 / m \Big/ P_0^2\right);$$

In the equation, $x_v[i]$ represents normalized and windowed audio frequency signals, P represents the acoustic pressure to be measured; and $P_0$ represents a reference acoustic pressure;

Standardizing the acoustic pressure level data:

$$x'_{spl}[t] = M - x_{spl}[t]/D_{peak};$$

in the equation, $x_{spl}'[t]$ represents standardized audio frequency signals, M is a predetermined standardization threshold value, and $D_{peak}$ represents a preset relative silence value.

From the foregoing description, it can be known that, by converting the audio frequency signals to be acoustic pressure level, compared with common sound power level data, changes in the sound can be known directly. Actually, variation of distance, environment will cause unsteadiness of the magnitude of the acoustic volume, voice recognition and analysis will be influenced, therefore, voice volume standardization makes it convenient to conduct subsequent forecast and analysis.

Further, conducting exponential forecasting for the acoustic pressure level data of the audio frequency signals:

Calculating square discrete signals of the standardized acoustic pressure level data:

$$x_t[t] = x_{spl}'^2[t];$$

Conducting cubic exponential smoothing forecasting according to the square discrete signals:

Given that an initial value of the first order exponential smoothing forecasting is $t_{gain}[0]$ = 1e-1, an initial value of second order exponential smoothing forecasting is $t_{smooth}[0]$ = 1e-1, an initial value of cubic exponential smoothing forecasting $t_{sthrength}[0]$ = 0.01, iterating, obtaining a first order exponential smoothing forecasting value $t_{gain}[t+1]$, a second order exponential smoothing forecasting value $t_{smooth}[t+1]$ and a cubic exponential smoothing forecasting value $t_{sthrength}[t+1]$;

$$t_{gain}[t+1] = \partial \times x_t[t] + (1-\partial) \times t_{gain}[t] \begin{cases} x_t[t] \le t_{gain}[t], \partial = 0.01 \\ x_t[t] > t_{gain}[t], \partial = 0.99 \end{cases};$$

$$x_{gain}[t] = x_t[t]/t[t+1];$$

$$t_{smooth}[t+1] = \partial \times x_{gain}[t] + (1-\partial) \times t_{smooth}[t] \begin{cases} x_{gain}[t] \leq t_{smooth}[t], \partial = 0.5 \\ x_{gain}[t] > t_{smooth}[t], \partial = 0.99 \end{cases};$$

$$x_{smooth}[t] = t_{smooth}[t]^2;$$

$$t_{sthrength}[t+1] = \partial \times x_{smooth}[t] + (1-\partial) \times t_{sthrength}[t] \begin{cases} x_{smooth}[t] \leq t_{sthrength}[t], \partial = 0.001 \\ x_{smooth}[t] > t_{sthrength}[t], \partial = 0.99 \end{cases};$$

$$x_{sthrength}[t] = x_{smooth}[t]/t_{sthrength}[t+1];$$

in the equation, $\partial$ is a smoothing coefficient, and $x_{sthrength}[t]$ represents the exponential smoothing forecasting result value.

From the foregoing description, the audio frequency signals are a set of data collected as per a temporal sequence, and exhibit stable development and change trends and rules in a short time, therefore, time series forecasting methods can be used for forecasting, and good prediction effects are achieved by cubic exponential smoothing forecasting of macroscopic periodic data.

Further, calculating the change values of the audio frequency signals by the first order differential equation comprises:

Calculating the change values $\Delta x_{sthrength}$ by first order differentiation calculation of the exponential forecasting result values in the current time slot and the exponential forecasting result values in the previous time slot:

$$\Delta x_{sthrength} = x_{sthrength}[t] - x_{sthrength}[t-1];$$

From the foregoing description, it can be known that, by first order differentiation calculation some wave undulation can be smoothed, variation effects of peak values can be seen more clearly, so as to facilitate filtering of peak over threshold.

Further, outputting the lighting effects dynamically engaged with the music rhythms comprises:

Calculating a light variation range A according to the exponential smoothing forecasting values of the acoustic pressure level data of the audio frequency signals:

$$L_{max} = x_{sthrength}[t] \times 100;$$

$$A = L_{max} - Y;$$

$$L(t) = \begin{cases} A\sin(\omega\tau) + Y, & 0 \leq \tau \leq \dfrac{\pi}{\omega} \\ Y, & otherwise \end{cases};$$

In the equation, $L_{max}$ represents the highest brightness reached by the rhythmic movement of the lights, $x_{sthrength}[t]$ represents the exponential forecasting result values of the acoustic pressure level data, Y means the brightness maintained finally after conclusion of each rhythm, A represents the light variation range corresponding to each rhythm, $\omega$ represents a light change response speed corresponding to each rhythm, and $\tau$ represents a time $\tau$ in a variation process after commencement of the tth frame of data.

From the foregoing description, it can be known that, to output the lighting effects dynamically engaged with the music rhythms, different lighting effects can be outputted by changes of parameters such as amplitude, speed, and brightness, and enhance correlation between the music rhythms and the lighting effects.

With reference to figure 2, another embodiment of the present invention provides a lighting effect display terminal based on music rhythm, comprising a storage medium, a processor and a computer program stored on the storage medium and can be executed by the processor, wherein the processor executes the computer program to realize the lighting effect display method based on music rhythm.

The lighting effect display method and terminal based on music rhythm according to the present invention is suitable for LED lighting effect adjustment, aims to improve correlation between the music rhythmic points and the lighting effects and hereinafter a description will be given with some embodiments:

Embodiment 1

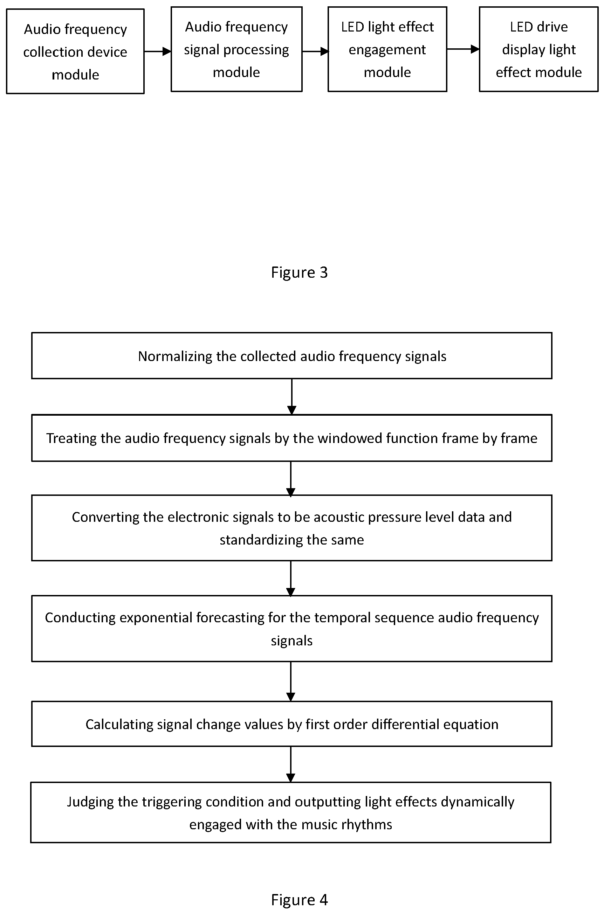

With reference to figures 1, 3 and 4, a lighting effect display method based on music rhythm, comprising:
S1, receiving audio frequency signals of a piece of music collected at predetermined time intervals, filtering the audio frequency signals, extracting music rhythms, normalizing and windowing the audio frequency signals, converting the audio frequency signals to be acoustic pressure level data.

In the present embodiment, collecting the audio frequency signals of a piece of music can be done by an audio frequency collection device, and the audio frequency signals can be processed with an audio frequency signal processing module.

By treating the audio frequency signals by signal processing, that is, framing, windowing and filtering the signals and conducting additional calculation to extract audio frequency features, the key information can be obtained while information redundancy can be deleted.

S11, conducting filtering design by considering a Gaussian function approximation mean value function and extracting the music rhythms.

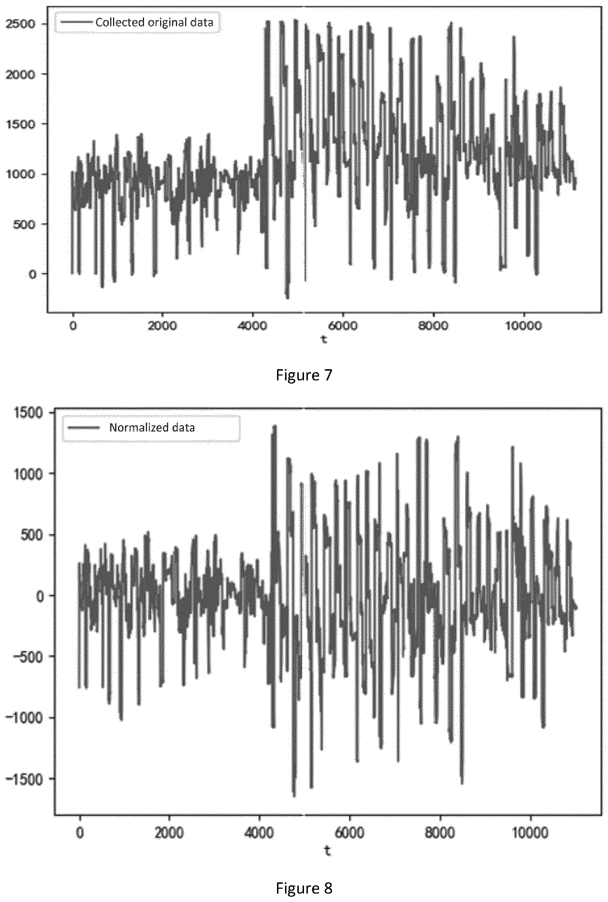

Specifically, with reference to figure 7, the audio frequency signals are generally continuous signals, it is necessary to separate signals in a piece of music to be several frames for analysis, the key of the melodies lies in the rhythms, the music rhythms are usually generated by low bass devices, low frequency components are important components in the music rhythms, with the low-pass filtering based on Gaussian function rhythms can be extracted, however, it is difficult to realize the Gaussian function in the filter, and this involves a high cost, therefore, a Gaussian function approximation mean value function is considered for filtering design, to extract the music rhythms, wherein the mean value function can be $x_{ave}[t]$, $x_{ave}[t]$ represents average values of components in a frame of data in a time slot t.

A 50 Hz frequency signal interference cycle is 20 ms, to mitigate 50 Hz interference, sampling every 20 ms, and sampling original data in 256 points. And detecting and receiving the audio frequency signals of the music by modular ADC (Analog to digital convertor) detection.

S 12, normalizing the audio frequency signals.

Specifically, with reference to figure 8, conducting mean normalization for the data collected, reducing the components in each frame of the audio frequency signals with the average value of the components in each frame to guarantee that the mean value of each frame is 0:

$$x_{ave}[t] = \sum_{i=1}^{m} x_{v0}[i] \Big/ m$$

;

$$x'[i] = x_{v0}[0] - x_{ave}[t];$$

in the equation, t represents a frame of data in a time slot t, m represents a serial number of the data points of components collected in each frame of data, $1 \leq i \leq m$, $x_{v0}[i]$ represents a value of the ith component in each frame, $x_{ave}[t]$ represents an average value of the components in a frame of data in a time slot t, and x'[i] represents normalized audio frequency signals.

S13, windowing the audio frequency signals.

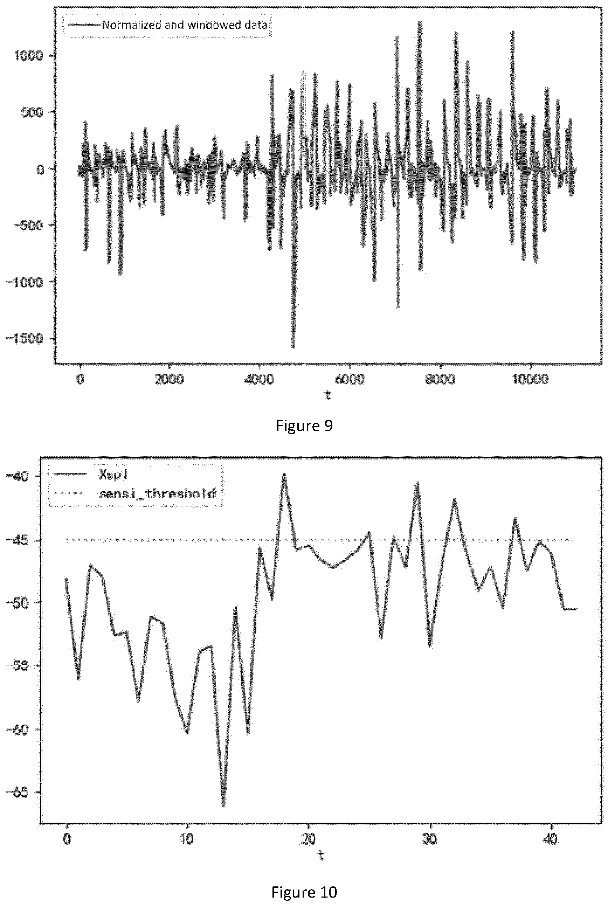

Specifically, with reference to figure 9, to prevent revelation of the frequency spectra, adding a Hamming window function for each frame of normalized audio frequency signals, multiplying the normalized audio frequency signals with the window function, which equals convolution in the frequency domain, so as to obtain better minor lobe reduction magnitude:

$$\omega(i) = \begin{cases} 0.54 - 0.46\cos[2\pi i/(m-1)], & 0 \le i \le m-1 \\ 0, & \textit{otherwise} \end{cases};$$

$$x_v[i] = x'[i] \times \omega(i);$$

in the equation, $\omega(i)$ represents the window function, and $x_v[i]$ represents windowed audio frequency signals.

S14 converting the audio frequency signals to be acoustic pressure level data. Specifically, with reference to figure 10, calculating the acoustic pressure level data of the processed audio frequency signals $x_{spl}[i]$:

$$P = \sqrt{\sum_{i=1}^{m} x_v[i]^2 / m};$$

$$x_{spl}[t] = 20\log(P/P_0) = 10\log(P^2/P_0^2) = 10\log\left(\sum_{i=1}^{m} x_v[i]^2 / m \middle/ P_0^2\right);$$

In the equation, $x_v[i]$ represents the normalized and windowed audio frequency signals, P represents acoustic pressure to be measured, a root mean square value of the value of the temporal domain sampling point, P0 represents a reference acoustic pressure, and the highest voltage value is 4095;

Giving peak standardization treatment to the acoustic pressure level data, so that the data are located in an interval of 0-1, uniformizing the data indicators, and uniformizing by subtracting without changing the discrete conditions of the data, the process is stable;

$$x'_{spl}[t] = M - x_{spl}[t]/D_{peak};$$

in the equation, $x_{spl}'[t]$ represents standardized acoustic pressure level data, M represents a standardized preset threshold (M=1), and $D_{peak}$ represents a preset relative silence value.

S2, conducting exponential smoothing forecasting for the acoustic pressure level data, calculating variation values of the exponential forecasting results by a first order differential equation, and when the variation values reach a triggering condition, outputting lighting effects dynamically engaged with the music rhythms.

In the present embodiment, it is possible to judge whether to generate lights based on the current audio frequency signals with an LED lighting effect engagement module, and output lighting effects dynamically engaged with the audio frequency signals by an LED drive display light effect module.

S21, conducting exponential forecasting for the acoustic pressure level data of the audio frequency signals.

Specifically, the audio frequency signals are a set of data collected at a temporal sequence, and exhibit stable development and change trends and rules in a short time, therefore, time series forecasting can be used to forecast the development in the future, the cubic exponential smoothing forecasting has good forecasting effects for macroscopic cyclic data, and in view of the foregoing factors, cubic exponential smoothing forecasting is used, and in the forecasting calculation equation, actual values of the smoothing coefficient $\partial$ are dynamically adjusted by comparing the forecasted values of multiple simulations and actually collected data.

In the present embodiment, square discrete signals of the standardized acoustic pressure level data is: $x_t[t] = x_{spl}'^2[t]$;

Conducting cubic exponential smoothing forecasting according to the square discrete signals:

Configuring an initial value of the first order smoothing forecasting to be $t_{gain}[0] = 1e-1$, an initial value of the second order smoothing forecasting to be $t_{smooth}[0] = 1e-1$, an initial value of the cubic exponential smoothing forecasting to be $t_{sthrength}[0] = 0.01$, iterating, and obtaining respectively the first order exponential smoothing forecasting value $t_{gain}[t+1]$, the second order exponential smoothing forecasting value $t_{smooth}[t+1]$ and the cubic exponential smoothing forecasting value $t_{sthrength}[t+1]$:

$$t_{gain}[t+1] = \partial \times x_t[t] + (1-\partial) \times t_{gain}[t] \begin{cases} x_t[t] \le t_{gain}[t], \partial = 0.01 \\ x_t[t] > t_{gain}[t], \partial = 0.99 \end{cases};$$

$$x_{gain}[t] = x_t[t]/t[t+1];$$

$$t_{smooth}[t+1] = \partial \times x_{gain}[t] + (1-\partial) \times t_{smooth}[t] \begin{cases} x_{gain}[t] \le t_{smooth}[t], \partial = 0.5 \\ x_{gain}[t] > t_{smooth}[t], \partial = 0.99 \end{cases};$$

$$x_{smooth}[t] = t_{smooth}[t]^2;$$

$$t_{sthrength}[t+1] = \partial \times x_{smooth}[t] + (1-\partial) \times t_{sthrength}[t] \begin{cases} x_{smooth}[t] \le t_{sthrength}[t], \partial = 0.001 \\ x_{smooth}[t] > t_{sthrength}[t], \partial = 0.99 \end{cases};$$

$$x_{sthrength}[t] = x_{smooth}[t]/t_{sthrength}[t+1];$$

in the equation, $\partial$ represents a smoothing coefficient, and $x_{sthrength}[t]$ represents exponential forecasting result values.

S22, calculating change values of the audio frequency signals by the first order differential equation.

Specifically, conducting first order differential equation for the exponential forecasting result values in the current time slot with the exponential forecasting result values in the previous time slot, and obtaining the change values $\Delta x_{sthrength}$, when the change values fall in a range of [-1.0, +1.0], when $\Delta x_{sthrength}$ is bigger than 0, the music rhythms are present, and for different types of music different thresholds are provided:

$$\Delta x_{sthrength} = x_{sthrength}[t] - x_{sthrength}[t-1].$$

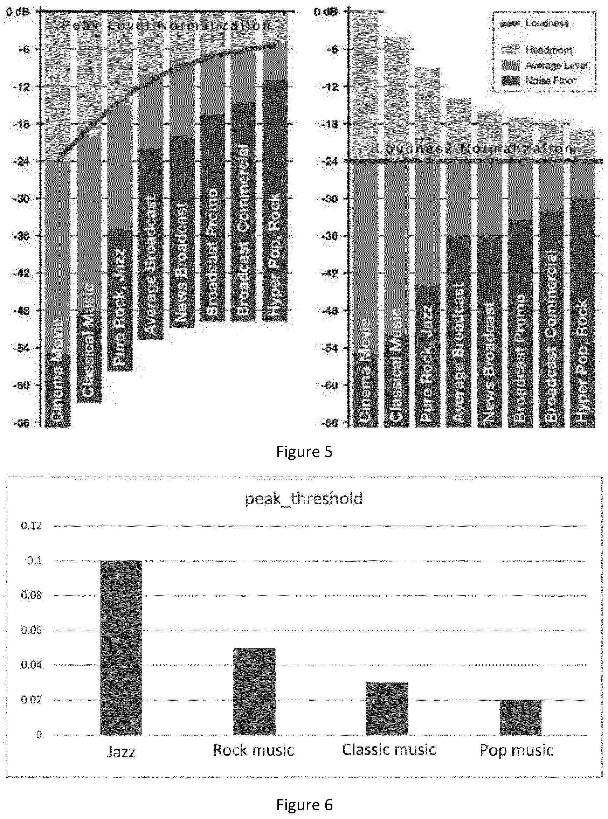

Finally, driving the hardware lights to display the lighting effects according to multi-dimensional judgment thresholds, and for different types of music, the dynamic ranges are different, calculation of the loudness range (LRA) is done by statistic calculation of loudness changes in a piece of music at different moments. With reference to figure 6, what pop music, rock music and classic music exhibit in the dynamic range are different. We have defined that the change thresholds of pop music, classic music, rock music and jazz music to adjust dynamically in a range of [0-1.0] according to empirical values in experiments and commissioning, and the specific values are positively correlated with the dynamic range just as the loudness curve in figure 5, and the thresholds for the music types are non-linear.

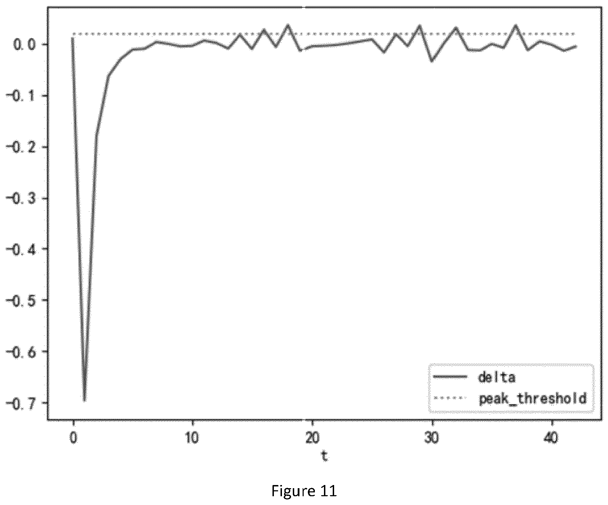

With reference to figures 10 and 11, the sensitivity threshold can be selected according to distance of the usage conditions and volumes of the music sources, generally 1%-100% sensitivity corresponds to -50 db to -10 db and the collection intervals and ranges of different microphones may be different:

$$\begin{cases} \Delta x_{sthrength}[t] \ge peak\_threshold \\ x_{spl}[t] \ge sensi\_threshold \end{cases}.$$

S23, calculating light variation ranges A according to exponential forecasting values of the acoustic pressure level data of the audio frequency signals:

$$L_{max} = x_{sthrength}[t] \times 100;$$

$$A = \mathrm{L_{max}} - Y;$$

$$L(t) = \begin{cases} A\sin(\omega\tau) + Y, & 0 \leq \tau \leq \dfrac{\pi}{\omega} \\ Y, & otherwise \end{cases};$$

In the equation, $\mathrm{L_{max}}$ represents the highest brightness that the light rhythmic changes can reach, $x_{sthrength}[t]$ represents the exponential forecasting result values of the acoustic pressure level data, Y represents the brightness finally maintained after conclusion of each rhythm in a piece of music, A represents light change ranges corresponding to each rhythm, $\omega$ represents light change response speed corresponding to each rhythm, $\tau$ represents a time $\tau$ in the variation process followed by the tth frame of data, for different types of music, the foregoing parameters can be adjusted, it is also possible to make periodic color changes according to changes of each frame $\tau$, and by changing parameters such as the amplitude, the speed and the brightness different light effects can be produced.

Therefore, with the aforesaid light effect display method based on music rhythms, the computation speed is high, the consumed system resource is small, and the cost is low; furthermore, correlation between the music rhythms and the light effects is improved, the rhythmic movement is good and the method is suitable for use in multiple occasions; and by employing a filtering method that is easy to implement in conjunction with exponential smoothing forecasting to improve accuracy, for different types of music judgment thresholds with different differential peak values are adopted, and the light effects are dynamically engaged with the display results.

Embodiment 2

With reference to figure 2, a lighting effect display terminal 1 based on music rhythm, comprising a storage memory 2, a process 3 and a computer program stored on the storage memory 2 and can be run by the processor 3, wherein the processor 3 executes the computer program to execute steps of the lighting effect display method based on music rhythm.

In view of the foregoing description, for the lighting effect display method and terminal based on music rhythm, by filtering the collected audio frequencies of the music and extracting music rhythms, more accurate lighting effects can be dynamically prepared for the audio frequencies; by normalizing and windowing the audio frequency signals, converting the same to be acoustic pressure level data, conducting exponential forecasting and calculating variation values thereof, therefore, by processing, converting and forecasting of the audio frequency signals the change values of the audio frequencies can be obtained, the computational speed can be improved and the computational cost can be reduced. When the variation values reach the triggering condition, in conjunction with the music rhythms, the light effects dynamically engaged with the music rhythms can be output, correlation between the music rhythms and the lighting effects can be improved and rhythmic light changes can be achieved.

**Claims**

1. A lighting effect display method based on music rhythm, comprising:
   receiving frames of audio frequency signals of music collected at predetermined time intervals, filtering the audio frequency signals and thereby extracting music rhythms, **characterizing in that** the method further comprises:

   normalizing and windowing the audio frequency signals, and converting the normalized and windowed audio frequency signals to be acoustic pressure level data;
   conducting exponential forecasting of the acoustic pressure level data, calculating variation values of said exponential forecasting results by first-order differential equations, and outputting lighting effects dynamically engaged with the music rhythms when the variation values reach a triggering condition.

2. The lighting effect display method based on music rhythm according to claim 1, wherein normalizing the audio frequency signals comprises:

   subtracting values of components in each frame of the audio frequency signals with average values of the components in each frame of the audio frequency signals:

$$x_{\text{ave}}[t] = \sum_{i=1}^{m} x_{v0}[i] \bigg/ m \quad ;$$

$$\text{x '}[i] = x_{v0}[i] - x_{\text{ave}}[t];$$

wherein t represents a frame of data at a time slot t, m is a serial number of a data point of a component in each frame of data, $1 \leq i \leq m$, $x_{v0}[i]$ means a value of an ith component in each frame, $x_{\text{ave}}[t]$ is an average value of components in the frame of data in the time slot of t, and x'[i] is a normalized audio frequency signal.

3. The lighting effect display method based on music rhythm according to claim 2, wherein windowing the normalized audio frequency signals comprises:

adding a hamming windowing function for each frame of normalized audio frequency signals, and multiplying the normalized audio frequency signals with the windowing function:

$$\omega(i) = \begin{cases} 0.54 - 0.46\cos[2\pi i /(m-1)], & 0 \leq i \leq m-1 \\ 0, & otherwise \end{cases} .$$

$$x_v[i] = \text{x '}[i] \times \omega(i);$$

in the equation, $\omega(i)$ represents the windowing function and $x_v[i]$ represents windowed audio frequency signals.

4. The lighting effect display method based on music rhythm according to claim 2, wherein calculating acoustic pressure level data $x_{spl}[t]$ of the processed audio frequency signals comprises:

$$P = \sqrt{\sum_{i=1}^{m} x_v[i]^2 / m}$$

$$x_{spl}[t] = 20\log(P/P_0) = 10\log\left(P^2/P_0^2\right) = 10\log\left(\sum_{i=1}^{m} x_v[i]^2 / m \bigg/ P_0^2\right)$$

In the equation, $x_v[i]$ represents normalized and windowed audio frequency signals, P represents an acoustic pressure to be measured; and $P_0$ represents a reference acoustic pressure;
standardizing the acoustic pressure level data to attain standardized acoustic pressure level data:

$$\text{x '}_{spl}[t] = M - x_{spl}[t]/D_{peak};$$

in the equation, $x_{spl}'[t]$ represents standardized audio frequency signals, M is a predetermined standardization threshold value, and $D_{peak}$ represents a preset relative silence value.

5. The lighting effect display method based on music rhythm according to claim 4, wherein conducting exponential forecasting of the acoustic pressure level data of the audio frequency signals comprises:

calculating square discrete signals of the standardized acoustic pressure level data:

$$x_t[t] = x_{spl}'^2[t];$$

conducting cubic exponential smoothing forecasting according to the square discrete signals:

given that an initial value of the first order exponential smoothing forecasting is $t_{gain}[0]$ = 1e-1, an initial value of second order exponential smoothing forecasting is $t_{smooth}[0]$ = 1e-1, an initial value of cubic exponential smoothing forecasting $t_{sthrength}[0]$ = 0.01, iterating, obtaining a first order exponential smoothing forecasting value $t_{gain}[t+1]$, a second order exponential smoothing forecasting value $t_{smooth}[t+1]$ and a cubic exponential smoothing forecasting value $t_{sthrength}[t+1]$;

$$t_{gain}[t+1] = \partial \times x_t[t] + (1-\partial) \times t_{gain}[t] \begin{cases} x_t[t] \le t_{gain}[t], \partial = 0.01 \\ x_t[t] > t_{gain}[t], \partial = 0.99 \end{cases};$$

$$x_{gain}[t] = x_t[t]/t[t+1];$$

$$t_{smooth}[t+1] = \partial \times x_{gain}[t] + (1-\partial) \times t_{smooth}[t] \begin{cases} x_{gain}[t] \le t_{smooth}[t], \partial = 0.5 \\ x_{gain}[t] > t_{smooth}[t], \partial = 0.99 \end{cases};$$

$$x_{smooth}[t] = t_{smooth}[t]^2;$$

$$t_{sthrength}[t+1] = \partial \times x_{smooth}[t] + (1-\partial) \times t_{sthrength}[t] \begin{cases} x_{smooth}[t] \le t_{sthrength}[t], \partial = 0.001 \\ x_{smooth}[t] > t_{sthrength}[t], \partial = 0.99 \end{cases};$$

$$x_{sthrength}[t] = x_{smooth}[t]/t_{sthrength}[t+1];$$

in the equation, $\partial$ is a smoothing coefficient, and $x_{sthrength}[t]$ represents the exponential smoothing forecasting result value.

6. The lighting effect display method based on music rhythm according to claim 5, wherein calculating the variation values of the audio frequency signals by the first order differential equation comprises:

calculating the variation values $\Delta x_{sthrength}$ by first order differentiation calculation of the exponential forecasting result values in the current time slot and the exponential forecasting result values in the previous time slot:

$$\Delta x_{sthrength} = x_{sthrength}[t] - x_{sthrength}[t-1].$$

7. The lighting effect display method based on music rhythm according to claim 1, wherein outputting the light effects dynamically engaged with the music rhythms comprises:

calculating a light variation range A according to the exponential smoothing forecasting values of the acoustic pressure level data of the audio frequency signals:

$$L_{max} = x_{sthrength}[t] \times 100;$$

$$A = L_{max} - Y;$$

$$L(t) = \begin{cases} A\sin(\omega\tau) + Y, & 0 \leq \tau \leq \dfrac{\pi}{\omega} \\ Y, & otherwise \end{cases}.$$

in the equation, $L_{max}$ represents the highest brightness reached by the rhythmic movement of the lights, $x_{sthrength}$[t] represents the exponential forecasting result values of the acoustic pressure level data, Y means the brightness maintained finally after conclusion of each rhythm, A represents the light variation range corresponding to each rhythm, $\omega$ represents a light change response speed corresponding to each rhythm, and $\tau$ represents a time $\tau$ in a change process after commencement of the tth frame of data.

8. A lighting effect display terminal based on music rhythm, comprising a storage medium, a processor and a computer program stored on the storage medium adapted to be executed by the processor, wherein the processor executes the computer program to effect the lighting effect display method based on music rhythm as defined in any of claims 1-7.

**Patentansprüche**

1. Verfahren zur Anzeige von Lichteffekten auf Basis von Musikrhythmen, das Folgendes umfasst:
Empfangen von Frames von Audiofrequenzsignalen der Musik, die in vorbestimmten Zeitintervallen gesammelt werden, Filtern der Audiofrequenzsignale und dadurch Extrahieren von Musikrhythmen, **dadurch gekennzeichnet, dass** das Verfahren ferner Folgendes umfasst:

Normalisieren und Fensterverwalten der Audiofrequenzsignale und Umwandeln der normalisierten und fensterverwalteten Audiofrequenzsignale in Schalldruckpegeldaten;
Durchführen einer exponentiellen Vorhersage der Schalldruckpegeldaten, Berechnen von Abweichungswerten der exponentiellen Vorhersageergebnisse durch Differentialgleichungen erster Ordnung, und Ausgeben von Lichteffekten, die dynamisch mit den Musikrhythmen in Wechselwirkung stehen, wenn die Änderungswerte eine Auslösebedingung erreichen.

2. Verfahren zur Anzeige von Lichteffekten auf Basis von Musikrhythmen nach Anspruch 1, wobei das Normalisieren der Audiofrequenzsignale Folgendes umfasst:

Reduzieren von Werten von Komponenten in jedem Frame der Audiofrequenzsignale mit den Durchschnittswerten der Komponenten in jedem Frame der Audiofrequenzsignale:

$$x_{ave}[t] = \sum_{i=1}^{m} x_{v0}[i] \Big/ m \quad ;$$

$$x'[i] = x_{v0}[i] - x_{ave}[t];$$

wobei t für einen Datenframe zu einem Zeitschlitz t steht, wobei m eine Seriennummer eines Datenpunkts einer Komponente in jedem Datenframe ist, wobei $1 \leq i \leq m$, $x_{v0}[i]$ einen Wert einer i-ten Komponente in jedem Frame bedeutet, wobei $x_{ave}[t]$ ein Durchschnittswert der Komponenten im Datenframe im Zeitschlitz t und $x'[i]$ ein normalisiertes Audiofrequenzsignal ist.

3. Verfahren zur Anzeige von Lichteffekten auf Basis von Musikrhythmen nach Anspruch 2, wobei Fensterverwalten der normalisierten Audiofrequenzsignale Folgendes umfasst:

Hinzufügen einer Hamming-Fensterfunktion für jeden Rahmen normalisierter Audiofrequenzsignale und Multiplizieren der normalisierten Audiofrequenzsignale mit der Fensterfunktion:

$$\omega(i) = \begin{cases} 0.54 - 0.46\cos[2\pi i/(m-1)], & 0 \le i \le m-1 \\ 0, & \text{ansonsten} \end{cases} ;$$

$$x_v[i] = x'[i] \times \omega(i);$$

wobei in der Gleichung $\omega(i)$ für die Fensterfunktion und $x_v[i]$ für fensterverwaltete Audiofrequenzsignale steht.

4.  Verfahren zur Anzeige von Lichteffekten auf Basis von Musikrhythmen nach Anspruch 2, wobei Berechnen der Schalldruckpegeldaten $x_{spl}[t]$ der verarbeiteten Audiofrequenzsignale Folgendes umfasst:

$$P = \sqrt{\sum_{i=1}^{m} x_v[i]^2 / m} ;$$

$$x_{spl}[t] = 20\log(P/P_0) = 10\log\left(P^2/P_0^2\right) = 10\log\left(\sum_{i=1}^{m} x_v[i]^2 / m \middle/ P_0^2\right) ;$$

wobei in der Gleichung $x_v[i]$ für normalisierte und fensterverwaltete Audiofrequenzsignale, P für einen zu messenden Schalldruck und $P_0$ für einen Referenzschalldruck steht;
Standardisieren der Schalldruckpegeldaten zum Erhalten der standardisierten Schalldruckpegeldaten:

$$x'_{spl}[t] = M - x_{spl}[t]/D_{peak};$$

wobei in der Gleichung $x_{spl}'[t]$ für standardisierte Audiofrequenzsignale steht, wobei M ein vorbestimmter Standardisierungsschwellenwert ist, und wobei $D_{peak}$ für einen voreingestellten relativen Ruhewert steht.

5.  Verfahren zur Anzeige von Lichteffekten auf Basis von Musikrhythmen nach Anspruch 4, wobei Durchführen einer exponentiellen Vorhersage der Schalldruckpegeldaten der Audiofrequenzsignale Folgendes umfasst:

Berechnen quadratischer diskreter Signale der standardisierten Schalldruckpegeldaten: $x_t[t] = x_{spl}'^2[t]$;
Durchführen einer kubischen exponentiellen Glättungsvorhersage gemäß den quadratischen diskreten Signalen:

angenommen, ein Anfangswert der exponentiellen Glättungsvorhersage erster Ordnung $t_{gain}[0] = 1e\text{-}1$ ist, wobei ein Anfangswert der exponentiellen Glättungsvorhersage zweiter Ordnung $t_{smooth}[0] = 1e\text{-}1$ und ein Anfangswert der kubischen exponentiellen Glättungsvorhersage $t_{sthrength}[0] = 0,01$ ist, iterierend, Erhalten eines exponentiellen Glättungsvorhersagewerts erster Ordnung $t_{gain}[t+1]$, eines exponentiellen Glättungsvorhersagewerts zweiter Ordnung $t_{smooth}[t+1]$ und eines kubischen exponentiellen Glättungsvorhersagewerts $t_{sthrength}[t+1]$;

$$t_{gain}[t+1] = \partial \times x_t[t] + (1-\partial) \times t_{gain}[t] \begin{cases} x_t[t] \le t_{gain}[t], \partial = 0.01 \\ x_t[t] > t_{gain}[t], \partial = 0.99 \end{cases} ;$$

$$x_{gain}[t] = x_t[t]/t[t+1];$$

$$t_{smooth}[t+1] = \partial \times x_{gain}[t] + (1-\partial) \times t_{smooth}[t] \begin{cases} x_{gain}[t] \le t_{smooth}[t], \partial = 0.5 \\ x_{gain}[t] > t_{smooth}[t], \partial = 0.99 \end{cases};$$

$$x_{smooth}[t] = t_{smooth}[t]^2;$$

$$t_{sthrength}[t+1] = \partial \times x_{smooth}[t] + (1-\partial) \times t_{sthrength}[t] \begin{cases} x_{smooth}[t] \le t_{sthrength}[t], \partial = 0.001 \\ x_{smooth}[t] > t_{sthrength}[t], \partial = 0.99 \end{cases};$$

$$x_{sthrength}[t] = x_{smooth}[t]/t_{sthrength}[t+1];$$

in der Gleichung ist $\partial$ ein Glättungskoeffizient und $x_{sthrength}[t]$ steht für den Wert des exponentiellen Glättungsvorhersageergebnisses.

6. Verfahren zur Anzeige von Lichteffekten auf Basis von Musikrhythmen nach Anspruch 5, wobei Berechnen der Abweichungswerte der Audiofrequenzsignale durch die Differentialgleichung erster Ordnung Folgendes umfasst: Berechnen der Abweichungswerte $\Delta x_{sthrength}$ durch Differenzierungsberechnung erster Ordnung der exponentiellen Vorhersageergebniswerte im aktuellen Zeitschlitz und der exponentiellen Vorhersageergebniswerte im vorherigen Zeitschlitz:

$$\Delta x_{sthrength} = x_{sthrength}[t] - x_{sthrength}[t-1].$$

7. Verfahren zur Anzeige von Lichteffekten auf Basis von Musikrhythmen nach Anspruch 1, wobei Ausgeben der Lichteffekte, die dynamisch mit den Musikrhythmen in Wechselwirkung stehen, Folgendes umfasst:

Berechnen eines Lichtabweichungsbereichs A gemäß den exponentiellen Glättungsvorhersagewerten der Schalldruckpegeldaten der Audiofrequenzsignale:

$$L_{max} = x_{sthrength}[t] \times 100;$$

$$A = L_{max} - Y;$$

$$L(t) = \begin{cases} A\sin(\omega\tau) + Y, & 0 \le \tau \le \dfrac{\pi}{\omega} \\ Y, & ansonsten \end{cases};$$

wobei in der Gleichung $L_{max}$ für die höchste Helligkeit, die durch die rhythmische Bewegung der Lichter erreicht wird, steht, wobei $x_{sthrength}[t]$ für die exponentiellen Vorhersageergebniswerte der Schalldruckpegeldaten steht, wobei Y die Helligkeit bedeutet, die nach Abschluss jedes Rhythmus schließlich beibehalten wird, wobei A für den Lichtabweichungsbereich steht, der jedem Rhythmus entspricht, wobei $\omega$ für eine Lichtänderungsreaktionsgeschwindigkeit steht, die jedem Rhythmus entspricht, und wobei $\tau$ für eine Zeit $\tau$ in einem Änderungsvorgang nach Beginn des t-ten Datenrahmens steht.

8. Endgerät zur Anzeige von Lichteffekten auf Basis von Musikrhythmen, das ein Speichermedium, einen Prozessor und ein auf dem Speichermedium gespeichertes Computerprogramm umfasst und vom Prozessor ausgeführt werden kann, wobei der Prozessor das Computerprogramm ausführt, um das in einem der Ansprüche 1 bis 7 definierte Verfahren zur Anzeige von Lichteffekten auf Basis von Musikrhythmen zu realisieren.

**Revendications**

1. Procédé d'affichage d'effets de lumière sur la base d'un rythme musical, comprenant :
la réception de trames de signaux audiofréquences de musique collectées à des intervalles de temps prédéterminés, le filtrage des signaux audiofréquences et ainsi, l'extraction de rythmes musicaux, **caractérisé en ce que** le procédé comprend en outre :

la normalisation et le fenêtrage des signaux audiofréquences, et la conversion des signaux audiofréquences normalisés et fenêtrés en données de niveau de pression acoustique ;
la réalisation d'une prévision exponentielle des données de niveau de pression acoustique, le calcul de valeurs de variation desdits résultats de prévision exponentielle par des équations différentielles de premier ordre, et la sortie d'effets de lumière dynamiquement liés aux rythmes musicaux lorsque les valeurs de variation atteignent une condition de déclenchement.

2. Procédé d'affichage d'effets de lumière sur la base d'un rythme musical selon la revendication 1, dans lequel la normalisation des signaux audiofréquences comprend :

la soustraction de valeurs de composantes dans chaque trame des signaux audiofréquences avec des valeurs moyennes des composantes dans chaque trame des signaux audiofréquences :

$$x_{moy.}[t] = \sum_{i=1}^{m} x_{v0}[i] / m$$ ;

$$x'[i] = x_{v0}[i] - x_{moy.}[t]$$ ;

dans lequel t représente une trame de données à un intervalle de temps t, m est un numéro de série d'un point de données d'une composante dans chaque trame de données, $1 \leq i \leq m$, $x_{v0}[i]$ désigne une valeur d'une ième composante dans chaque trame, $x_{moy.}[t]$ est une valeur moyenne de composantes dans la trame de données à l'intervalle de temps t, et $x'[i]$ est un signal audiofréquence normalisé.

3. Procédé d'affichage d'effets de lumière sur la base d'un rythme musical selon la revendication 2, dans lequel le fenêtrage des signaux audiofréquences normalisés comprend :

l'ajout d'une fonction de fenêtrage de Hamming pour chaque trame de signaux audiofréquences normalisés, et la multiplication des signaux audiofréquences normalisés par la fonction de fenêtrage :

$$\omega(i) = \begin{cases} 0.54 - 0.46\cos[2\pi i/(m-1)], & 0 \leq i \leq m-1 \\ 0, & sinon \end{cases}$$ ;

$$x_v[i] = x'[i] \times \omega(i)$$ ;

dans l'équation, $\omega(i)$ représente la fonction de fenêtrage et $x_v[i]$ représente des signaux audiofréquences fenêtrés.

4. Procédé d'affichage d'effets de lumière sur la base d'un rythme musical selon la revendication 2, dans lequel le calcul de données de niveau de pression acoustique $x_{spl}[t]$ des signaux audiofréquences traités comprend :

$$P = \sqrt{\sum_{i=1}^{m} x_v[i]^2 / m}$$

;

$$x_{spl}\,[t] = 20\log(P/P_0) = 10\log\left(P^2/P_0^2\right) = 10\log\left(\sum_{i=1}^{m} x_v[i]^2 / m \middle/ P_0^2\right)$$

;

dans l'équation, $x_v[i]$ représente des signaux audiofréquences normalisés et fenêtrés, P représente une pression acoustique à mesurer, et $P_0$ représente une pression acoustique de référence ;
la normalisation des données de niveau de pression acoustique afin d'obtenir des données de niveau de pression acoustique normalisées :

$$x'_{spl}[t] = M - x_{spl}[t]/D_{crête};$$

dans l'équation, $x_{spl}'[t]$ représente des signaux audiofréquences normalisés, M est une valeur seuil de normalisation prédéterminée, et $D_{crête}$ représente une valeur de silence relative prédéfinie.

5. Procédé d'affichage d'effets de lumière sur la base d'un rythme musical selon la revendication 4, dans lequel la réalisation d'une prévision exponentielle des données de niveau de pression acoustique des signaux audiofréquences comprend :

le calcul de signaux discrets carrés des données de niveau de pression acoustique normalisées : $x_t[t] = x_{spl}'^2[t]$ ;
la réalisation d'une prévision par lissage exponentiel cubique selon les signaux discrets carrés :

étant donné que, une valeur initiale de prévision par lissage exponentiel de premier ordre est $t_{gain}[0] = 1e\text{-}1$, une valeur initiale de prévision par lissage exponentiel de second ordre est $t_{lissage}[0] = 1e\text{-}1$, et une valeur initiale de prévision par lissage exponentiel cubique est $_{force}[0] = 0{,}01$, l'itération pour obtenir une valeur de prévision par lissage exponentiel de premier ordre $t_{gain}[t+1]$, une valeur de prévision par lissage exponentiel de second ordre $t_{lissage}[t+1]$ et une valeur de prévision par lissage exponentiel cubique $t_{force}[t+1]$ ;

$$t_{gain}\,[t+1] = \partial \times x_t[t] + (1-\partial) \times t_{gain}\,[t] \begin{cases} x_t[t] \le t_{gain}\,[t], \partial = 0.01 \\ x_t[t] > t_{gain}\,[t], \partial = 0.99 \end{cases}$$

;

$$x_{gain}[t] = x_t[t]/t[t+1] \;;$$

$$t_{lissage}\,[t+1] = \partial \times x_{gain}\,[t] + (1-\partial) \times t_{lissage}\,[t] \begin{cases} x_{gain}\,[t] \le t_{lissage}\,[t], \partial = 0.5 \\ x_{gain}\,[t] > t_{lissage}\,[t], \partial = 0.99 \end{cases}$$

;

$$x_{lissage}[t] = t_{lissage}[t]^2 \;;$$

$$t_{force}\,[t+1] = \partial \times x_{lissage}\,[t] + (1-\partial) \times t_{force}\,[t] \begin{cases} x_{lissage}\,[t] \le t_{force}\,[t], \partial = 0.001 \\ x_{lissage}\,[t] > t_{force}\,[t], \partial = 0.99 \end{cases}$$

;

$$x_{force}[t] = x_{lissage}[t]/t_{force}[t+1] \; ;$$

dans l'équation, $\partial$ est un coefficient de lissage, et $x_{force}[t]$ représente la valeur de résultat de prévision par lissage exponentiel.

6. Procédé d'affichage d'effets de lumière sur la base d'un rythme musical selon la revendication 5, dans lequel le calcul des valeurs de variation des signaux audiofréquences par l'équation différentielle de premier ordre comprend : le calcul des valeurs de variation $\Delta x_{force}$ par calcul de différenciation de premier ordre des valeurs de résultat de prévision exponentielle à l'intervalle de temps actuel et des valeurs de résultat de prévision exponentielle à l'intervalle de temps précédent :

$$\Delta x_{force} = x_{force}[t] - x_{force}[t-1].$$

7. Procédé d'affichage d'effets de lumière sur la base d'un rythme musical selon la revendication 1, dans lequel la sortie des effets de lumière dynamiquement liés aux rythmes musicaux comprend :

le calcul d'une plage de variation de lumière A en fonction des valeurs de prévision par lissage exponentiel des données de niveau de pression acoustique des signaux audiofréquences :

$$L_{max} = x_{force}[t] \times 100 \; ;$$

$$A = L_{max} - Y \; ;$$

$$L(t) = \begin{cases} A\sin(\omega\tau) + Y, & 0 \le \tau \le \dfrac{\pi}{\omega} \\ Y, & sinon \end{cases} \; ;$$

dans l'équation, $L_{max.}$ représente la luminosité maximale atteinte par le mouvement rythmique des lumières, $x_{force}[t]$ représente les valeurs de résultat de prévision exponentielle des données de niveau de pression acoustique, Y désigne la luminosité maintenue finalement après la conclusion de chaque rythme, A représente la plage de variation de lumière correspondant à chaque rythme, $\omega$ représente une vitesse de réponse au changement de lumière correspondant à chaque rythme, et $\tau$ représente un temps $\tau$ dans un processus de changement après le début de la tème trame de données.

8. Terminal d'affichage d'effets de lumière sur la base d'un rythme musical, comprenant un support de stockage, un processeur et un programme d'ordinateur stocké sur le support de stockage conçu pour être exécuté par le processeur, dans lequel le processeur exécute le programme d'ordinateur pour mettre en œuvre le procédé d'affichage d'effets de lumière sur la base d'un rythme musical selon l'une quelconque des revendications 1 à 7.

Receiving audio frequency signals of music collected at a certain time interval, filtering the audio frequency signals, extracting music rhythms, normalizing and windowing the audio frequency signals, and converting the audio frequency signals to be acoustic pressure level data

Conducting exponential forecasting for the acoustic pressure level data, calculating change values of the exponential forecasting results by the first order differential equation, and when the change values reach a triggering condition, outputting light effects dynamically engaged with the music rhythms

Figure 1

1

A light effect display terminal based on music rhythm

2

3

Storage memory

Processor

Figure 2

| Audio frequency collection device module | → | Audio frequency signal processing module | → | LED light effect engagement module | → | LED drive display light effect module |

Figure 3

| Normalizing the collected audio frequency signals |

↓

| Treating the audio frequency signals by the windowed function frame by frame |

↓

| Converting the electronic signals to be acoustic pressure level data and standardizing the same |

↓

| Conducting exponential forecasting for the temporal sequence audio frequency signals |

↓

| Calculating signal change values by first order differential equation |

↓

| Judging the triggering condition and outputting light effects dynamically engaged with the music rhythms |

Figure 4

Figure 5

Figure 6

Figure 7

Figure 8

Figure 9

Figure 10

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008226644 A